## Europäisches Patentamt
## European Patent Office
## Office européen des brevets

(19)

(11) Veröffentlichungsnummer: **0 176 679 B1**

(12) **EUROPÄISCHE PATENTSCHRIFT**

(45) Veröffentlichungstag der Patentschrift:
**05.10.88**

(21) Anmeldenummer: **85108992.0**

(22) Anmeldetag: **18.07.85**

(51) Int. Cl.⁴: **F 15 B 11/02, A 01 B 63/10**

(54) **Hydraulische Steuereinrichtung.**

(30) Priorität: **24.08.84 DE 3431104**

(43) Veröffentlichungstag der Anmeldung:
**09.04.86 Patentblatt 86/15**

(45) Bekanntmachung des Hinweises auf die Patenterteilung:
**05.10.88 Patentblatt 88/40**

(84) Benannte Vertragsstaaten:
**DE FR GB IT**

(56) Entgegenhaltungen:
**EP - A - 0 115 590**
**EP - A - 0 149 743**
**DE - A - 2 705 054**
**DE - A - 2 816 212**
**DE - A - 2 827 339**

(73) Patentinhaber: **ROBERT BOSCH GMBH, Postfach 50, D-7000 Stuttgart 1 (DE)**

(72) Erfinder: **Beck, Walter, Vöhingerweg 3, D-7141 Schwieberdingen (DE)**

ACTORUM AG

## Beschreibung

### Stand der Technik

Die Erfindung geht aus von einer hydraulischen Steuereinrichtung für ein von einem Hydromotor angetriebenes, insbesondere an einem landwirtschaftlichen Fahrzeug angebautes Arbeitsgerät nach der Gattung des Hauptanspruchs. In der älteren europäischen Anmeldung 84 113 596.5 (EP-A-0 149 743) wurde bereits eine derartige Steuereinrichtung vorgeschlagen, bei der dem Steuerschieber zur Steuerung eines einfachwirkenden Krafthebers ein als Druckkompensationsventil und als Druckminderer arbeitendes Drosselventil vorgeschaltet ist. Um in Schaltstellung Senken des Steuerschiebers einen Rückfluss des Druckmittels in den Federraum des Drosselventils zu verhindern, ist in der Arbeitsleitung ein zusätzliches Rückschlagventil angeordnet. Dabei ist zum Öffnen des Rückschlagventils in Schaltstellung Heben des Steuerschiebers ein zusätzlicher Druck notwendig, der den bei Heben des Krafthebers wirkenden Druck mindert. Dadurch baut die Steuereinrichtung aufwendig und arbeitet mit relativ hohen Druckverlusten.

### Vorteile der Erfindung

Die erfindungsgemässe Steuereinrichtung mit den kennzeichnenden Merkmalen des Hauptanspruchs hat demgegenüber den Vorteil, dass keine zusätzlichen Bauteile notwendig sind. Mit Hilfe des Steuerschiebers ist in den Stellungen Neutral und Senken die Verbindung zur Federkammer des Drosselventils blockiert. Dadurch baut das Regelventil einfach und kompakt. Mit Hilfe der Drosselstelle im Steuerschieber ist eine zusätzliche Druckanhebung im Federraum des Drosselventils in Stellung Heben möglich. Das Druckniveau des Druckmittels in Stellung Heben ist unabhängig vom Neutralumlaufdruck, der somit relativ niedrig gehalten werden kann. Die Feder des Drosselventils braucht nur wenig vorgespannt zu sein.

Durch die in den Unteransprüchen aufgeführten Massnahmen sind vorteilhafte Weiterbildungen und Verbesserungen der im Hauptanspruch angegebenen Steuereinrichtung möglich. Besonders vorteilhaft ist eine Ausbildung nach einem der Ansprüche 3 bis 6, falls der Steuerschieber in Neutralstellung im Bereich einer Steuerkammer negative Schaltüberdeckung hat. Während bei einem zusätzlichen Rückschlagventil dieses auf den Aufsteuerdruck des Sperrventils vorgespannt sein müsste, ist auch in dieser Ausbildung der Durchflusswiderstand des Druckmittels in Stellung Heben gering. Dadurch sind die Energieverluste in Stellung Heben gering, und der Druck des zum Kraftheber strömenden Druckmittels kann optimal ausgenützt werden.

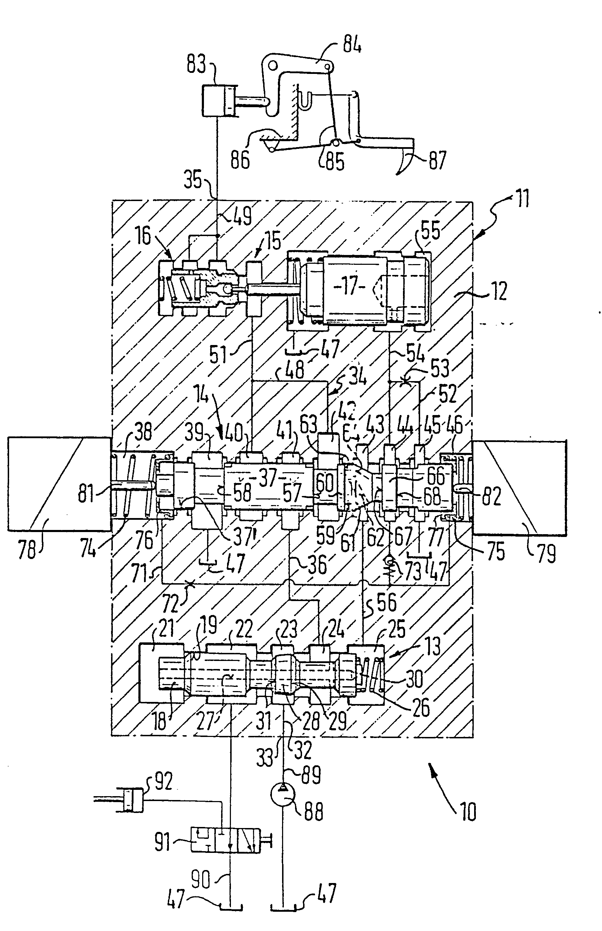

### Zeichnung Ein Ausführungsbeispiel der Erfindung ist in der Zeichnung dargestellt, deren einzige Figur eine hydraulische Steuereinrichtung in vereinfachter Darstellung in Stellung Neutral zeigt.

Aus der vorveröffentlichen Druckschrift EP-A-115 590 ist eine Steuereinrichtung für einen einfach wirkenden Kraftheber mit den Oberbegriffsmerkmalen des Anspruchs 1 bekannt, die in drei zueinander parallelen Achsen ein Drosselventil, ein Steuerventil sowie einen Sperrblock aufweist. Auch hier ist in der Arbeitsleitung ein zusätzliches Rückschlagventil angeordnet, das bei Senken den Rückfluss des Druckmittels in den Federraum des Drosselventils verhindert. Durch dieses zusätzliche Bauelement baut diese Steuereinrichtung aufwendig und kostspielig.

### Beschreibung des Ausführungsbeispiels

Die einzige Figur zeigt eine Steuereinrichtung 10 mit einem Regelwegeventil 11, das zur Hubwerksregelung an einem landwirtschaftlichen Fahrzeug, insbesondere einem Traktor mit angelenktem Pflug, verwendet wird.

Das Regelwegeventil 11 hat ein Gehäuse 12, in dem in drei zueinander parallelen Achsen ein Drosselventil 13, ein Steuerventil 14 sowie ein Sperrblock 15, bestehend aus Sperrventil 16 und zugehörigem Aufstosskolben 17, angeordnet sind.

Das Drosselventil 13 hat einen Drosselschieber 18, der im Gehäuse 12 in einer Schieberbohrung 19 gleitet. In der Schieberbohrung 19 sind nebeneinander liegend, bezogen auf die Figur von links nach rechts gesehen, durch ringförmige Erweiterungen ein Druckraum 21, ein Weiterlaufraum 22, ein Einlassraum 23, ein Auslassraum 24 sowie ein Federraum 25 ausgebildet. Der Drosselschieber 18 wird von einer in dem Federraum 25 angeordneten Feder 26 sowie von den Drükken in dem Federraum 25 und dem Druckraum 21 beaufschlagt. Zu diesem Zweck steht der Druckraum 21 über im Drosselschieber 18 angeordnete Steuerkanäle 27 mit dem Auslassraum 24 in Verbindung. Die Feder 26 belastet den Drosselschieber 18 nach links in Richtung einer nicht gezeigten Ausgangsstellung, in welcher er mit einem mittleren Kolbenabschnitt 28 die Verbindung vom Einlassraum 23 zum Weiterlaufraum 22 blockiert. Ferner ist im Drosselschieber 18 eine Vorsteuerdrossel 30 angeordnet, welche zwischen die Steuerkanäle 27 und den Federraum 25 geschaltet ist, so dass deren Druckgefälle den Drosselschieber 18 gegen die Feder 26 belasten kann. Am Kolbenabschnitt 28 ist auf der dem Auslassraum 24 zugewandten Seite eine erste Steuerphase 29 angeordnet, welche in der Ausgangsstellung des Drosselschiebers 18 die Verbindung vom Einlassraum 23 zum Auslassraum 24 voll aufsteuert. Ausserdem ist am Kolbenabschnitt 28 an dessen anderer Stirnseite eine zweite Steuerphase 31 ausgebildet, welche zum Steuern der Verbindung vom Einlassraum 23 zum Weiterlaufraum 22 dient. Der Einlassraum 23 ist über einen ersten Leitungsabschnitt 32 mit einem Eingang 33 des Regelwegeventils 11 verbunden, von dem eine Arbeitsleitung 34 zu einem Ausgang 35 führt, wobei in die Arbeitsleitung 34 hintereinander das Drosselventil 13, das Steuerventil 14 sowie das Sperrventil 16 geschaltet sind. Als Teil dieser Arbeitsleitung 34 führt vom Auslassraum 24 ein zweiter Leitungsabschnitt 36 zum nachfolgenden Steuerventil 14.

Das Steuerventil 14 hat einen Steuerschieber 37, der in einer Schieberbohrung 37' dicht und gleitend geführt ist. In letzter sind wiederum nebeneinander liegend und, bezogen auf die Figur, von links nach rechts gesehen eine erste Dämpfungskammer 38, eine erste Rücklaufkammer 39, eine Ablaufkammer 40, eine erste Arbeitskammer 41, eine erste Steuerkammer 42, eine zweite Arbeitskammer 43, eine zweite Steuerkammer 44, eine zweite Rücklaufkammer 45 und eine zweite Dämpfungskammer 46 angeordnet. Die beiden Rücklaufkammern 39, 45 sind zu einem Tank 47 entlastet. In die erste Arbeitskammer 41 mündet der zweite Leitungsabschnitt 36 der Arbeitsleitung 34. Von der zweiten Arbeitskammer 42 führt ein dritter Leitungsabschnitt 48 als Teil der Arbeitsleitung 34 zum Sperrventil 16, von dem ein vierter Leitungsabschnitt 49 zum Ausgang 35 führt. Ferner führt vom Ausgang 35 über das Sperrventil 16 eine Rücklaufleitung 51 zur Ablaufkammer 40 und weiter über die erste Rücklaufkammern 39 zum Tank 47. Arbeitsleitung 34 und Rücklaufleitung 51 sind teilweise, nämlich im Bereich des Sperrventils 16, identisch. Von der zweiten Steuerkammer 44 führt eine erste Steuerleitung 52 über eine Drosselstelle 53 zur zweiten Rücklaufkammer 45 und damit weiter zum Tank 47. Von der Steuerleitung 52 zweigt vor der Drosselstelle 53 eine Leitung 54 zu einer dem Aufstosskolben 17 zugeordneten Druckkammer 55 ab. Ferner verbindet eine zweite Steuerleitung 56 die zweite Arbeitskammer 43 im Steuerventil 14 mit dem Federraum 25 im Drosselventil 13.

Am Steuerschieber 37 selbst ist eine erste Steuerkante 57 ausgebildet, um den über die Arbeitsleitung 34 zufliessenden Druckmittelstrom proportional zur Auslenkung des Steuerschiebers 37 zu steuern. Während in einer Hebenstellung des Steuerschiebers 37 diese erste Steuerkante 57 die Verbindung zwischen der ersten Arbeitskammer 41 und der ersten Steuerkammer 42 aufsteuert, unterbricht sie in der Senkenstellung und in der gezeichneten Neutralstellung diese Verbindung. Ferner weist der Steuerschieber 37 eine zweite Steuerkante 58 auf, um in entsprechender Weise den über die Rücklaufleitung 51 zum Tank 47 abfliessenden Druckmittelstrom zu steuern. Während in der Hebenstellung sowie in der Neutralstellung diese zweite Steuerkante 58 die Verbinung von der Ablaufkammer 40 zur ersten Rücklaufkammer 39 unterbricht, ist in der Senkenstellung diese Verbindung proportional zur Schieberauslenkung aufgesteuert. Getrennt durch eine Ringnut 59 befinden sich am Steuerschieber 37 zwei schmale Kolbenabschnitte 60, 61. Im Kolbenabschnitt 61, der der zweiten Arbeitskammer 43 zugewandt ist, ist eine den Kolbenabschnitt 61 etwa quer durchdringende und als Drosselstelle 62 dienende Bohrung ausgebildet. Eine Steuerkante 63 des Kolbenabschnitts 60 blockiert in Stellung Senken des Steuerschiebers 37 und in der gezeichneten Neutralstellung die Verbindung von der ersten Steuerkammer 42 zur zweiten Arbeitskammer 43. In Stellung Heben öffnet zwar die Steuerkante 63 ihre Verbindung, aber der Kolbenabschnitt 61 mit seiner Steuerkante 64 blockiert noch die Verbindung von der zweiten Arbeitskammer 43 zur ersten Steuerkammer 42, so dass nur ein Druckmittelfluss durch die Drosselstelle 62 möglich ist. Ferner ist am Steuerschieber 37 ein dritter Kolbenabschnitt 66 ausgebildet, dessen Steuerkante 67 die Verbindung zwischen der zweiten Arbeitskammer 43 und der zweiten Steuerkammer 44 steuert, und somit eine Verbindung über die Steuerleitung 52 zum Tank 47 beeinflusst. Eine zweite am Kolbenabschnitt 66 ausgebildete Steuerkante 68 steuert die Verbindung von der zweiten Steuerkammer 44 zur zweiten Rücklaufkammer 45. Der Kolbenabschnitt 66 ist dabei nur so breit, dass er in der gezeigten Neutralstellung des Steuerschiebers 37 eine negative Schaltüberdeckung hat, d.h. hier weder die Verbindung von der zweiten Arbeitskammer 43 zur zweiten Steuerkammer 44 noch die von dieser zur zweiten Rücklaufkammer 45 absperrt. In Stellung Heben blockiert die Steuerkante 67 die Verbindung von der zweiten Arbeitskammer 43 zur zweiten Steuerkammer 44. In Stellung Senken blockiert die andere Steuerkante 68 die Verbindung von der zweiten Steuerkammer 44 zur zweiten Rücklaufkammer 45.

Die beiden Dämpfungskammern 38, 46 sind miteinander über einen Ausgleichskanal 71 verbunden, in dem eine Drossel 72 angeordnet ist. Der Ausgleichskanal 71 ist über ein federbelastetes Rückschlagventil 73 mit der Steuerkammer 44 so verbunden, dass das Rückschlagventil 73 zum Ausgleichskanal 71 hin öffnet. In jeder Dämpfungskammer 38 bzw. 46 ist eine Rückstellfeder 74 bzw. 75 sowie ein Federteller 76 bzw. 77 angeordnet, welche bei nicht betätigtem Antrieb den Steuerschieber 37 in der gezeichneten Neutralstellung zentrieren. Beide Dämpfungskammern 38, 46 sind nach aussen hin durch Elektromagnete 78, 79 verschlossen. Die beweglichen Anker der Schaltmagnete 78, 79 stehen nur über Betätigungsstössel 81 bzw. 82 mit dem Steuerschieber 37 in Wirkverbindung.

Der am Ausgang 35 des Regelwegeventils 11 angeschlossene einfachwirkende Hydromotor ist ein Kraftheber 83, der über einen Hubarm 84 und ein übliches Dreipunktgestänge 85 einen am Traktorenrahmen 86 angelenkten Pflug 87 betätigen kann. Der Eingang 33 des Regelwegeventils 11 wird von einer Pumpe 88 über eine Zulaufleitung 89 mit Druckmittel versorgt.

Von dem Weiterlaufraum 22 im Drosselventil 13 führt eine Ablaufleitung 90 zum Tank 47. In dieser Ablaufleitung 90 ist ein nachgeschaltetes Wegeventil 91 angeordnet, das einen zweiten Hydromotor 92 steuern kann. Die Steuereinrichtung 10 ist demnach für einen offenen Kreislauf ausgebildet.

Es sei davon ausgegangen, dass bei nicht erregten Elektromagneten 78, 79 der Steuerschieber 37 von seinen Rückstellfedern 74, 75 in seiner in der Figur dargestellten Neutralstellung zentriert ist. Dann sind die Steuerkanten 57, 58, 63 geschlossen. Der Kolbenabschnitt 66 sperrt weder die Verbindung von der zweiten Arbeitskammer 43 zur zweiten Steuerkammer 44 noch die von dieser zur zweiten Rücklaufkammer 45, d.h. er arbeitet in Neutralstellung mit negativer Schaltüberdeckung. Von dem von der Pumpe 88 über die Zulaufleitung 89 in den Einlassraum 23 des Drosselventils 13 geförderten Druckmittelstrom zweigt ein kleiner Steuerölstrom ab und fliesst vorbei an der drosselnden ersten Steuerphase 29 in den Auslassraum 24, über die Steuerkanäle 27 und die Vorsteuerdrossel 30 in den Federraum 25 und über die zweite Steuerleitung 56 in die zweite Arbeitskammer 43. Von dort strömt es über die zweite Steuerkammer 44 in die zweite Rücklaufkammer 45 und in den Tank 47. Die Verbindung von der zweiten Arbeitskammer 43 zur ersten Steuerkammer 42 ist durch den Kolbenabschnitt 60 und seine Steuerkante 63 blockiert. Dieser Steuerölstrom verursacht nun an der Vorsteuerdrossel 30 ein Druckgefälle, das den Drosselschieber 18 gegen die Kraft seiner Feder 26 nach rechts auslenkt. Da die Feder 26 geringe Spannung hat, ist der Drosselschieber 18 leicht nach rechts verschiebbar. Dadurch ist ein niedriger Neutralumlaufdruck möglich. Der Drosselschieber 18 arbeitet somit als Stromregelschieber, der den zum Tank 47 abfliessenden Steuerölstrom konstant und auf möglichst niedrigem Druckniveau hält. Falls der zweite Hydromotor 92 nicht betätigt wird, kann der von der Pumpe 88 geförderte Druckmittelstrom auch vom Einlassraum 23 über den Weiterlaufraum 22 in die Ablaufleitung 90 und weiter zum Tank 47 abfliessen.

Soll zum Heben des Pflugs 87 ein Druckmittelstrom über die Arbeitsleitung 34 des Regelwegeventils 11 zum Kraftheber 83 strömen, so wird der Elektromagnet 79 erregt und der Steuerschieber 37 nach links verschoben. Im Bereich der Hebenstellung des Steuerschiebers 37 sind die Steuerkanten 57, 63 und 68 mehr oder weniger weit aufgesteuert, während die Steuerkanten 58 und 67 ihre zugeordneten Verbindungen blockieren. Es fliesst somit ein Druckmittelstrom von der Pumpe 88 über die Arbeitsleitung 34 mit Drosselventil 13, Steuerventil 14 und geöffnetem Sperrventil 16 zum Kraftheber 83. Da die Steuerkante 57 des Steuerschiebers 37 geöffnet ist, strömt das Druckmittel im Steuerventil 14 von der ersten Arbeitskammer 41 zur zweiten Steuerkammer 42. Gleichzeitig fliesst auch Druckmittel in der zweiten Steuerleitung 56 zwischen dem Federraum 25 des Drosselventils 13 und der zweiten Arbeitskammer 43 des Steuerventils 14. Da in Hebenstellung des Steuerschiebers 37 die Steuerkante 63 geöffnet ist und jetzt der Kolbenabschnitt 60 die Verbindung von der ersten Steuerkammer 42 zur zweiten Arbeitskammer 43 öffnet, kann das über die Steuerleitung 56 vom Federraum 25 in die zweite Arbeitskammer 43 einströmende Druckmittel über die Drossel 62 und die Ringnut 59 in die erste Steuerkammer fliessen. Die Steuerkante 67 des Kolbenabschnitts 66 blockiert die Verbindung von der zweiten Arbeitskammer 43 zu zweiten Steuerkammer 44, so dass die gesamte in die zweite Arbeitskammer 43 einfliessende Druckmittelmenge über die Drossel 62 weiter strömt. Der an der Drosselstelle 62 abfallende Druck wirkt über die Steuerleitung 56 in den Federraum 25 des Drosselventils 13. Die zweite Steuerphase 31 am Drosselschieber 18 des Drosselventils 13 drosselt während des Hebenvorgangs des Krafthebers 83 die Verbindung vom Einlassraum 23 zum Weiterlaufraum 22 weitgehend ab. Aufgrund der Druckunterschiede vor und hinter der Steuerkante 57 des Steuerschiebers 37 arbeitet der Drosselschieber 18 als Druckwaage zu der als Messdrosselstelle dienenden Steuerkante 57. Dadurch ist eine lastkompensierte proportionale Hebensteuerung des Krafthebers 83 möglich. Zugleich hebt aber der an der Drosselstelle 62 abfallende Druck das Druckniveau im Federraum 25 gegenüber dem in Neutralstellung an. Dadurch ist ein niedriger Neutralumlaufdruck im Federraum 25 und ein höheres Druckgefälle in Stellung Heben möglich. Somit ist bei Hebenstellung ein höheres Regeldruckgefälle möglich, als bei Neutralstellung, wodurch der Druckmittelfluss zum Kraftheber 83 erhöht werden kann. Die Drosselstelle 62 kann auch als Aussenumfang des Kolbenabschnitts 61 verlaufende Längsnut ·oder auch als eine diesen durchdringende Bohrung ausgebildet sein.

Da die Steuerkante 67 des Kolbenabschnitts 66 des Steuerschiebers 37 die Verbindung von der zweiten Arbeitskammer 43 zur zweiten Steuerkammer 44 blockiert, kann sich in letzterer kein Druck aufbauen. Der Druckraum 55 des Aufstosskolbens 17 ist über die Leitung 54, die Steuerleitung 52 und die zweite Rücklaufkammer 45 zum Tank 47 entlastet. Es kann sich somit im Druckraum 55 in Hebenstellung des Steuerschiebers 37 kein Druck aufbauen.

Soll nun zum Senken des Pflugs 87 Druckmittel aus dem Kraftheber 83 entweichen, so wird der andere Elektromagnet 78 erregt und somit der Steuerschieber 37 aus der gezeichneten Neutralstellung heraus nach rechts in seine Senkenstellung gebracht. Die Steuerkante 58 des Steuerschiebers 37 entlastet dabei die Rücklaufleitung 51 von der Ablaufkammer 40 zur ersten Rücklaufkammer 39 und weiter zum Tank 47. Die Steuerkanten 57, 63 und 68 blockieren ihre zugeordneten Verbindungen. Gleichzeitig öffnet die Steuerkante 67 die Verbindung von der zweiten Arbeitskammer 43 zur zweiten Steuerkammer 44, so dass vom Federraum 25 des Drosselventils 13 über die Leitung 56 und über die Steuerleitung 52 mit der Drosselstelle 53 ein Steuerölstrom zur zweiten Rücklaufkammer 45 und zum Tank 47 abfliessen kann. Der an der Drosselstelle 53 abgegriffene Druck wirkt über die Leitung 54 in den Druckraum 55 und auf den Aufstosskolben 17, der das vorgesteuerte Sperrventil 16 öffnet. Vom Kraftheber 83 kann nun Druckmittel über das Sperrventil 16 und die Rücklaufleitung 51 zum Tank 47 abströmen, wobei die Steuerkante 58 die Grösse dieses Stroms bestimmt. Da die Steuerkante 63 die Verbindung von der ersten Steuerkammer 42 zur zweiten Arbeitskammer 43 sperrt, kann kein abströmendes Druckmittel von der Rücklaufleitung 51 über den dritten Leitungsabschnitt 48 der Arbeitsleitung 34 in die zweite Arbeitskammer 43 gelangen. Falls das nachgeschaltete Wegeventil 91 nicht betätigt ist, drosselt die zweite Steuerphase 31 des Drosselschiebers 18 die Verbindung vom Einlassraum 23 zum Weiterlaufraum 22 nur so weit an, dass sich im Auslassraum 24 ein Druck aufbaut, welcher der schwach vorgespannten Feder 26 das Gleichgewicht hält. Der über die Steuerkante 67 in die zweite Steuerkammer 44 gelangende Steuerölstrom hat somit ein konstantes Druckniveau, dessen Grösse durch die Feder 26 im Drosselventil 13 bestimmt wird. Dieses Druckniveau wird nun an der Drosselstelle 53 auf das zum Aufsteuern des Aufstosskolbens 17 notwendige Druckniveau angehoben.

Der in der zweiten Steuerkammer 44 herrschende Druck gelangt über das Rückschlagventil 73 in den Ausgleichskanal 71, der die beiden Dämpfungskammern 38, 46 miteinander verbindet. Wenn nun in den Dämpfungskammern 38, 46 aus irgendwelchen Gründen Lufteinschlüsse vorhanden sind, wird diese Luft durch den in der zweiten Steuerkammer 44 herrschenden Druck vorgespannt. Diese vorgespannte Luft stört die Funktion des Steuerventils 14 erheblich weniger als dies ohne Vorspannung der Fall wäre.

**Patentansprüche**

1. Hydraulische Steuereinrichtung (10) für ein von einem einfachwirkenden Hydrometer (83) angetriebenes, insbesondere an einem landwirtschaftlichen Fahrzeug angebautes Arbeitsgerät (87), mit einem aus Sperrventil (16) und Aufstosskolben (17) bestehenden Sperrblock (15), mit einem den Sperrblock (15) steuernden Steuerschieber (37), der eine den Druckmittelstrom zum Hydromotor (83) beim Heben beeinflussende, erste Steuerkante (57) und eine den vom Hydromotor (83) zum Tank (47) abfliessenden Druckmittelstrom beim Senken beeinflussende, zweite Steuerkante (58) aufweist, sowie mit einem dem Steuerschieber (37) vorgeschalteten, von einer in einem Federraum (25) angeordneten Feder (26) belasteten Drosselschieber (18), der in eine von einer Druckmittelquelle (88) über den Drosselschieber (18) und die erste Steuerkante (51) des Steuerschiebers (37) zum Hydromotor (83) geführte Arbeitsleitung (34) geschaltet ist und eine lastdruckunabhängige Steuerung ermöglicht, wobei der Drosselschieber (18) von der Feder (26) in Richtung die Arbeitsleitung (34) aufsteuernden Weise und von einer an der ersten Steuerkante (57) des Steuerschiebers (37) auftretenden Druckdifferenz in Gegenrichtung beaufschlagbar ist, wozu am Drosselschieber (18) dem Federraum (25) ein Druckraum (21) gegenüberliegt, und wobei in Stellung Senken des Steuerschiebers (37) der Federraum (25) zum Tank (47) entlastet ist, mit zwei dem Steuerschieber (37) zugeordneten Rücklaufkammern (39, 45), zwei Arbeitskammern (41, 43), einer Ablaufkammer (40) und mindestens einer Steuerkammer (42), dadurch gekennzeichnet, dass eine dritte Steuerkante (63) in den Schaltstellungen Neutral und Senken des Steuerschiebers (37) den Federraum (25) von der Arbeitsleitung (34) trennt und dass eine vierte Steuerkante (64) in Schaltstellung Heben den Federraum (25) über eine Drosselstelle (62) mit der Arbeitsleitung (34) verbindet.

2. Steuereinrichtung nach Anspruch 1, dadurch gekennzeichnet, dass die dritte und vierte Steuerkante (63, 64) an zusätzlichen Kolbenabschnitten (60, 61) des Steuerschiebers (37) ausgebildet sind, zwischen denen eine Ringnut (59) ausgebildet ist, dass die zusätzlichen Kolbenabschnitte (60, 61) eine Verbindung von der zweiten Arbeitskammer (43) zu der Steuerkammer (42) steuern, dass von der ersten Steuerkammer (42) die Arbeitsleitung (34) zu einem Sperrventil (16) der Steuereinrichtung (10) führt und dass die Arbeitskammer (43) über eine Steuerleitung (56) mit dem Federraum (25) des Drosselschiebers (18) verbunden ist.

3. Steuereinrichtung nach Anspruch 1 und/ oder 2, dadurch gekennzeichnet, dass der Steuerschieber (37) einen Kolbenabschnitt (66) mit negativer Schaltüberdeckung zwischen der Arbeitskammer (43), einer zweiten Steuerkammer (44) und der Rücklaufkammer (45) aufweist.

4. Steuereinrichtung nach einem der Ansprüche 1 bis 3, dadurch gekennzeichnet, dass von einer zweiten Steuerkammer (44) eine Steuerleitung (52, 54) abgeht, deren Druck zum Steuern des in die Arbeitsleitung (34) zwischen Steuerschieber (37) und Hydromotor (83) geschalteten Sperrblocks (15) dient.

5. Steuereinrichtung nach Anspruch 4, dadurch gekennzeichnet, dass in der Steuerleitung (52, 54) eine Drosselstelle (53) angeordnet ist.

6. Steuereinrichtung nach Anspruch 4, dadurch gekennzeichnet, dass in der Steuerleitung (52, 54) ein Druckhalteventil angeordnet ist.

7. Steuereinrichtung nach einem der Ansprüchen 3 bis 6, dadurch gekennzeichnet, dass die zweite Steuerkammer (44) in Hebenstellung des Steuerschiebers (37) mit Hilfe des Kolbenabschnitts (66) mit negativer Schaltüberdeckung von der Arbeitskammer (43) abgetrennt ist.

8. Steuereinrichtung nach einem der Ansprüche 3 bis 7, dadurch gekennzeichnet, dass die zweite Steuerkammer (44) in Senkenstellung des Steuerschiebers (37) mit Hilfe des Kolbenabschnitts (66) mit negativer Schaltüberdeckung von der Rücklaufkammer (45) abgesperrt ist.

9. Steuereinrichtung nach einem der Ansprüche 1 bis 8, dadurch gekennzeichnet, dass der Drosselschieber (18) Teil eines 3-Wege-Drosselventils (13) ist und zwei Steuerkanten (29, 31) aufweist.

10. Steuereinrichtung nach einem der Ansprüche 1 bis 9, dadurch gekennzeichnet, dass dem Steuerschieber (37) zwei Dämpfungskammern (38, 46) zugeordnet sind, dass diese über einen Ausgleichskanal (71) mit einer darin liegenden Drosselstelle (72) miteinander verbunden sind und dass die zweite Steuerkammer (44) über ein zum Ausgleichskanal (71) hin öffnendes Rück-

schlagventil (73) mit dem Ausgleichskanal (71) verbunden ist.

**Revendications**

1. Dispositif de commande hydraulique (10) pour un outil der travail (87), entraîné par un moteur hydraulique (83) et en particulier monté sur un véhicule agricole, avec un système de blocage (15) constitué d'une soupape d'arrêt (16) et d'un piston de poussée (17), avec un registre de commande (37) commandant le système de blocage (15), ce registre de commande (37) présentant une première arête de comande (57) qui, en se soulevant, influence le flux sous pression allant au moteur hydraulique (83), et une seconde arête de commande (58) qui, en s'abaissant, influence le flux sous pression s'écoulant du moteur hydraulique (83) vers le réservoir (47), ainsi qu'avec un registre d'étranglement (18), soumis à un ressort (26) disposé dans une chambre de ressort (25), et préconnecté au registre de commande (37), ce registre d'étranglement (18) étant relié à une conduite de travail (34) conduisant d'une source de pression (88) au moteur hydraulique (83) en passant par le registre d'étranglement (18) et la première arête de commande (57) ledit registre d'étranglement (18) permettant une commande indépendante de la pression de charge, grâce à quoi le registre d'étranglement (18) peut être commandé par le ressort (26) en direction de la façon de commander la conduite de travail (34), et en direction opposée par une différence de pression se produisant à la première arête de commande (57) du registre de comande (37), le registre d'étranglement (18) comportant une chambre de pression (21) située à l'opposé de la chambre de ressort (25), grâce à quoi, en position d'abaissement du registre de commande (37), la chambre de ressort (25) est détendue jusqu'au réservoir (47), avec deux chambres de retour (39, 45) adaptées au registre de commande (37), deux chambres de travail (41, 43), une chambre de décharge (40) et au moins une chambre de commande (42), caractérisé en ce qu'une troisième arête de commande (63) sépare la chambre de ressort (25) de la conduite de travail (34) dans les positions de commutation neutre et abaissement du registre de commande (37), et en ce qu'une quatrième arête de commande (64) relie la chambre de ressort (25) et la conduite de travail (34) par l'intermédiaire d'une position d'étranglement (62), dans une position de commutation avec abaissement registre de commande (37).

2. Dispositif de commande selon la revendication 1, caractérisé en ce que les troisième et quatrième arêtes de commande (63, 64) sont formées sur des sections supplémentaires (60, 61) du piston du registre de commande (37), entre lesquelles est formée une rainure circulaire (59), de sorte que les sections supplémentaires (60, 61) du piston commandent une liaison entre la seconde chambre de travail (43) et la chambre de commande (42), que de la première chambre de commande (42) la conduite de travail (34) conduit à une soupape d'arrêt (16) du dispositif de commande (10), et que la chambre de travail (43) est reliée à la chambre de ressort (25) du registre d'étranglement (18) par l'intermédiaire d'une conduite de commande (56).

3. Dispositif de commande selon l'une quelconque des revendications 1 ou 2, caractérisé en ce que le registre de commande (37) présente une section (66) de piston, avec un recouvrement négatif de connexion entre la chambre de travail (43), une seconde chambre de commande (44) et la chambre de retour (45).

4. Dispositif de commande selon l'une quelconque des revendications 1 à 3, caractérisé en ce que d'une seconde chambre de commande (44) part une conduite de commande (52, 54), dont la pression est utilisée pour la commande du système de blocage (15) connecté dans la conduite de travail (34) entre le registre de commande (37) et le moteur hydraulique (83).

5. Dispositif de commande selon la revendication 4, caractérisé en ce qu'une position d'étranglement (53) est disposée dans la conduite de commande (52, 54).

6. Dispositif de commande selon la revendication 4, caractérisé en ce qu'une soupape de maintien de pression est installée dans la conduite de commande (52, 54).

7. Dispositif de commande selon l'une quelconque des revendications 3 à 6, caractérisé en ce que la seconde chambre de commande (44) est séparée de la chambre de travail (43), en position de soulèvement du registre de commande (37), à l'aide de la section (66) du piston, avec recouvrement négatif de connexion.

8. Dispositif de commande selon l'une quelconque des revendications 3 à 7, caractérisé en ce que la seconde chambre de commande (44) est coupée de la chambre de retour (45), en position d'abaissement du registre de commande (37), à l'aide de la section (66) du piston, avec recouvrement négatif de connexion.

9. Dispositif de commande selon l'une quelconque des revendications 1 à 8, caractérisé en ce que le registre d'étranglement (18) fait partie d'une soupape d'étranglement à trois voies (13), et présente deux arêtes de commande (29, 31).

10. Dispositif de commande selon l'une quelconque des revendications 1 à 9, caractérisé en ce que deux chambres d'amortissement (38, 46) sont disposées dans le registre de commande (37), que ces chambres d'amortissement sont reliées entre elles par un canal d'équilibrage (72), celui-ci comportant une position d'étranglement (72), et que la seconde chambre de commande (44) est reliée au canal d'équilibrage (71) par l'intermédiaire d'une soupape anti-retour (73) s'ouvrant sur le canal d'équilibrage (71).

**Claims**

1. Hydraulic control device (10) for an implement (87) driven by a single-acting hydraulic motor (83) and attached in particular to an agricultural vehicle, having a check block (15) consisting of a check valve (16) and a pushopen piston (17), having a control slide (37) which controls the check block (15) and has a first control edge (57), influencing the flow of pressure medium to the hydraulic motor (83) during lifting, and a second control edge (58), influencing during lowering the flow of pressure medium running off from the hydraulic motor (83) to the tank (47), and also having a throttle slide (18) which is connected in front of the control slide (37), is loaded by a spring (26) arranged in a spring space (25), is connected into a working line (34), led from a pressure-medium source (88) via the throttle slide (18) and the frist control edge (51) of the control slide (37) to the hydraulic motor (83), and permits control independent of load pressure, wherein the throttle slide (18) can be acted upon by the spring (26) in direction [lacuna] in such a way as to open the working line (34) in controlled manner and in the opposite direction by a pressure difference occurring at the first control edge (57) of the control slide (37), for which purpose, at the throttle slide (18), a pressure space (21) is located opposite the spring space (25), and wherein, in the lowering position of the control slide (37), the spring space (25) is discharged to the tank (47), having two return chambers (39, 45), allocated to the control slide (37), two working chambers (41, 43), a discharge chamber (40), and at least one control chamber (42), characterized in that a third control edge (63), in the neutral and lowering control positions of the control slide (37), separates the spring space (25) from the working line (34), and that a fourth control edge (64), in the lifting control position, connects the spring space (25) to the working line (34) via a throttle point (62).

2. Control device according to Claim 1, characterized in that the third and fourth control edges (63, 64) are formed on additional piston sections (60, 61) of the control slide (37) between which an annular groove (59) is formed, that the additional piston sections (60, 61) control a connection from the second working chamber (43) to the control chamber (42), that, from the first control chamber (42), the working line (34) leads to a check valve (16) of the control device (10), and that the working chamber (43) is connected to the spring space (25) of the throttle slide (18) via a control line (56).

3. Control device according to Claim 1 and/or 2, characterized in that the control slide (37) has a piston section (66) having negative control overlap between the working chamber (43), a second control chamber (44) and the return chamber (45).

4. Control device according to any of Claims 1 to 3, charaterized in that branching off from a second control chamber (44) is a control line (52, 54) whose pressure serves to control the check block (15) connected into the working line (34) between control slide (37) and hydraulic motor (83).

5. Control device according to Claim 4, characterized in that a throttle point (53) is arranged in the control line (52, 54).

6. Control device according to Claim 4, characterized in that a pressure-holding valve is arranged in the control line (52, 54).

7. Control device according to any of Claims 3 to 6, characterized in that the second control chamber (44), in the lifting position of the control slide (37), is separated from the working chamber (43) by means of the piston section (66) having negative control overlap.

8. Control device according to one of Claims 3 or 7, characterized in that the second control chamber (44), in the lowering position of the control slide (37), is blocked off from the return chamber (45) by means of the piston section (66) having negative control overlap.

9. Control device according to any of Claims 1 to 8, characterized in that the throttle slide (18) is part of a 3-way throttle valve (13) and has two control edges (29, 31).

10. Control device according to any of Claims 1 to 9, characterized in that two damping chambers (38, 46) are allocated to the control slide (37), that these damping chambers (38, 46) are connected to each other via a compensating channel (71) having a throttle point (72) located therein, and that the second control chamber (44) is connected to the compensating channel (71) via a non-return valve (73) opening towards the compensating channel (71).